(19) Europäisches Patentamt / European Patent Office / Office européen des brevets

(11) **EP 3 081 901 A1**

(12) **EUROPEAN PATENT APPLICATION**

(43) Date of publication:
**19.10.2016 Bulletin 2016/42**

(51) Int Cl.:
**G01B 11/30** (2006.01)  **G01M 11/00** (2006.01)
**G01R 31/26** (2006.01)  **G01R 31/28** (2006.01)
**G01N 21/896** (2006.01)  **G01N 21/95** (2006.01)
**G01N 21/956** (2006.01)  **G01N 21/958** (2006.01)
**H01L 33/00** (2010.01)

(21) Application number: **15164145.3**

(22) Date of filing: **17.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Hennecke Systems GmbH**
**53909 Zülpich (DE)**

(72) Inventor: **Windeln, Wilbert**
**52525 Heinsberg (DE)**

(74) Representative: **Patentbüro Paul Rosenich AG**
**BGZ**
**9497 Triesenberg (LI)**

(54) **INSPECTION METHOD AND DEVICE FOR INSPECTING A SURFACE PATTERN**

(57)    The invention relates to an inspection method for inspecting a surface pattern (4) formed on a front side of a substrate (3), preferably of a sapphire wafer, the method comprising the steps of:

(a) irradiating , with first light (1), preferably having different wavelengths, a first area of the surface pattern (4) from the front side of the substrate (3);

(b) measuring at least one characteristic of said first light (1) after having interacted with the surface pattern (4), preferably by diffraction;

(c) irradiating , with second light (2), preferably having different wavelengths, a second area of the surface pattern (4) through the back side of the substrate (3), wherein the first area and the second area at least partially, preferably completely, overlap with each other;

(d) measuring at least one characteristic of said second light (2) after having interacted with the surface pattern (4), preferably by diffraction;

(e) calculating a quantity (T) containing information about at least one geometric property of the surface pattern (4) of the substrate (3), wherein the quantity (T) is a function of both, the characteristic of the first light (1) measured in step (b) and the characteristic of the second light (2) measured in step (d).

Fig. 4

**Description**

The invention relates to an inspection method for inspecting a surface pattern formed on a substrate, preferably on a sapphire wafer.

US6806951 B2 discloses method for monitoring semiconductor fabrication processes. The measurement device may be a scatterometer and comprises an illumination system and a detection systems. In the embodiment of Fig. 12 the specimen is illuminated from the front side and from the back side, in order to measure a property of the front surface and a property of the back surface of the specimen.

US5867276A discloses an optical scatterometer system that enables analysis of a sample material at various wavelengths without rotating or otherwise moving the sample material. A spectrometer measures the beam being diffracted by a periodic structure of the sample. The measurement may be performed in transmission and reflection setup. The sample is illuminated only from one side.

US8643847B1 discloses a patterned sapphire substrate (PSS) is measured from a fine phase map and a coarser height map of the sample. The surface of the sapphire substrate is detected by means of a CCD-camera.

EP1129322 B1 discloses the determination of the thickness of at least one layer on a substrate, which has geometric structures leading to light diffraction. The reflection and/or transmission light intensity values are calculated with use of an iteration model into which the individual layer parameters and the geometric dimensions of the geometric structures of the substrate enter as further parameters.

The problem arising in methods according to prior art consists in the fact that light scattered from the surface pattern (formed on the front side of the substrate) is swamped by light scattered by the back side of the substrate. The latter has a much higher intensity than the light scattered from the surface pattern. It is therefore difficult to gather information about the geometrical properties of the surface pattern. This problem enhances in applications where the back side of the substrate is not completely smooth, but has a coarse surface. This is the case if the substrate is not polished, but only grinded (e. g. quartz, sapphire), or even has damages originating from the foregoing cutting process (e.g. silicon wafers for solar cells).

The object of the invention is to overcome these problems and to provide an inspection method and device allowing a reliable and reproducible inspection of a surface pattern formed on the front side of the substrate. The results of that measurement (and its evaluation) should be - as much as possible - independent of the scattering process of light at the back surface of the substrate. The information about the geometry of the substrate obtained by the inspection method should closely match with the actual properties of the substrate. The inspection method should be simple and time-effective.

The object is achieved by an inspection method for inspecting a surface pattern formed on a front side of a substrate, preferably of a sapphire wafer, the method comprising the steps of:

(a) irradiating, with first light, preferably having different wavelengths, a first area of the surface pattern from the front side of the substrate;

(b) measuring at least one characteristic of said first light after having interacted with the surface pattern, preferably by diffraction;

(c) irradiating, with second light, preferably having different wavelengths, a second area of the surface pattern through the back side of the substrate, wherein the first area and the second area at least partially, preferably completely, overlap with each other;

(d) measuring at least one characteristic of said second light after having interacted with the surface pattern, preferably by diffraction;

(e) calculating a quantity containing information about at least one geometric property of the surface pattern of the substrate, wherein the quantity is a function of both, the characteristic of the first light measured in step (b) and the characteristic of the second light measured in step (d).

By irradiating the substrate from opposite sides (front and back side) and considering both, the measured characteristic of the first light and the measured characteristic of the second light, geometrical information about the surface pattern may be obtained in a more reliable manner. The adverse influence of light scattered on the back side of the substrate (contributing to the overall intensity measured by a detector) may be eliminated or at least significantly reduced by the inventive inspection method. By combining both characteristics (of first light and of second light) the proportion of the undesired signal may be reduced in the calculated quantity. The proportion of the wanted signal part (resulting from diffraction of light on the surface pattern) with respect to the disturbing signal part (resulting from scattering of the light particularly at the back side of the substrate) is increased by the inventive method, i.e. when calculating the quantity in step (e).

The function mentioned in step (e) is selected such, that the signal part originating from scattering of - first and second - light by the surface pattern is enhanced with respect to a disturbing signal part. The disturbing signal part may particularly comprise a signal part originating from scattering of the light with the back side surface of the substrate.

Preferably, the function (of step (e)) filters out and/or enhances, with respect to the individual characteristics measured in step (b) and step (c), the signal (may be also an information) originating from the interaction (preferably diffraction) of light with the surface pattern of the substrate. Preferably, at the same time, the function eliminates and/or reduces, with respect to the individual characteristics measured in step (b) and step (c), the disturbing signal (such as scattering of light at the back side of the substrate).

"Function of both" means that the characteristic of the first light measured in step (b) and the characteristic of the second light measured in step (d) are combined or related to each other. With other words: the calculated quantity is dependent on both characteristics, i.e. changes with both characteristics. The function may e.g. contain a ratio or a difference between that characteristics, and preferentially filters out and/or enhances the signal or information originating from the scattering (diffraction) of light at the surface pattern.

The "surface pattern" as mentioned in steps (a) through (d) is formed on the front side of the substrate, i.e. the term "surface pattern" always relates to the same surface pattern formed on the same side of the substrate.

The term "front side" is used to define that side of the substrate on which the surface pattern is formed. The terms "front side" and "back side" have no other meaning, particularly they have nothing to do with the orientation of the substrate within the inspection device and/or within an manufactured semiconductor and/or lightening device.

The surface pattern to be inspected has preferably a periodic structure. This allows to inspect the pattern by means of diffraction measurements. The (first and second) light comprise wavelengths for which the diffraction criterion is fulfilled for at least one order of diffraction, preferably for at least the zeroth order of diffraction. The inspection method is preferably a scatterometry method: here, the surface pattern is seen as diffraction grating. Here, the intensity of the diffracted light is measured spectrally in at least one diffraction order.

The back side of the substrate does not have a periodic structure, the surface of the back side may be smooth (polished) or coarse (grinded).

A preferred embodiment refers to an inspection method, where the back side of the substrate, preferably a sapphire substrate, is formed by an unpolished surface.

"Irradiating" in step (a) and step (c) means that light generated by a light source, preferably in form of a light beam, is directed to the first/second area of the surface pattern - in step (a) from the front side, and in step (c) through the back side of the substrate.

The preferred embodiment of (first and second) light having different wavelengths means that the light is polychromatic (i.e. multiple wavelengths are contained in that light).

The substrate is at least partially transparent for the light used during irradiation in step (a) and step (c). In such a way at least a portion of the second light may reach the surface pattern from the back side.

In a preferred embodiment "interaction" as mentioned in step (b) and (d) is the diffraction of the light by the (periodic) surface pattern. Although there might be other types of physical interaction, the characteristic measured in (b) and (d) is here the information about the diffraction (preferably the light's diffraction pattern).

It is preferred that in step (b) and step (d) the intensity of respective first and second light in dependence of the wavelength is measured.

Preferably, the at least one characteristic of said first light measured in step (b) is of the same type as the characteristic of said second light measured in step (d). This allows to reduce the adverse influence of the light scattered on the back surface of the substrate without complicated intermediate computing steps for adapting the characteristics to each other.

Preferably, step (b) is performed after transmission of said first light through the substrate or after reflection of said first light by the substrate and/or wherein step (d) is performed after transmission of said second light through the substrate or after reflection of said second light by the substrate. The measurement steps may be performed by standard detector arrangements. It is noted that the transmission variant is a preferred one, since the results are more or less independent of slight inclination deviations of the substrate within the inspection device.

Preferably, the at least one characteristic measured in step (b) is a spectrum of said first light after having interacted with the surface pattern, preferably a transmission spectrum, and/or wherein the characteristic measured in step (d) is a spectrum of said second light after having interacted with the surface pattern, preferably a transmission spectrum. The spectrum contains important information with respect to the diffraction of light by the surface pattern. The spectrum may be measured by means of a spectrometer. The measured spectrum may be pre-processed by filtering, particularly low pass filtering, to remove disturbing wavelengths. In this context it is mentioned that the spectrum may be given in dependence of the wavelength, the frequency and/or the wavenumber. In the present application "wavelength" is used for all these possibilities since also the frequency and the wavenumber are dependent of the wavelength.

In the case first and second light are measured by means of separate spectrometers, it is preferred that both spectrometers are calibrated with respect to each other, in order to allow correct assignment of the intensity values at each wavelength.

Preferably the spectra measured in step (b) and step (d) comprise at least the zeroth diffraction order.

Preferably, the quantity is calculated from the ratio between a spectrum of said first light, preferably a filtered spectrum of said first light, and a spectrum of said second light, preferably a filtered spectrum of said second light. Under the term "spectrum" a wavelength-dependent unit, such as the intensity of the detected light (electromagnetic radiation) and/or registered counts of the detector and/or a deduced unit, is understood. When forming the ratio between the spectra this is done for each wavelength, i.e. the ratio is formed at each wavelength. It was found that the spectral ratio between that spectra yields a quantity containing information about the surface pattern, wherein the disturbing portions are significantly reduced, i.e. 'neutralized' by forming the ratio.

Therefore, the quantity (calculated in step (e)) is preferably a spectral quantity.

Preferably, said first light and said second light are generated by the same light source, and wherein the substrate is turned around between step (a) and step (c) or wherein the light generated by the light source is reflected by at least one mirror, wherein preferably the light source comprises at least one LED. Here, only one light source and only one detector is necessary to perform the method. A positioning unit may be implemented in order to turn the substrate. After light has been directed to one side of the substrate, the positioning unit turns around the substrate, so that the other side of the substrate faces towards the (incident) light.

Preferably, first light and second light are generated by separate light sources, wherein preferably each of the light sources comprises at least one LED. Here, the inspection method may be accelerated, since turning of the substrate is not necessary. Step (a) and step (c) may even overlap in time.

Preferably, first light and second light are directed to the substrate in form of a beam, preferably a collimated light beam, preferably scanning the pattern. Beams of defined cross section allows to standardize the measurements. Reflected or transmitted beams may be measured easily in a defined measurement setup. Spatial resolution measurements may be performed, in order to inspect different areas of the surface pattern in detail. A beam forming optics may form the beam such, that the irradiated area of the surface pattern amount to 0,01 to 10mm$^2$, preferably about 1mm$^2$. With a receiving optics the transmitted or reflected light beam may be coupled into a detector, preferably a spectrometer.

Preferably the substrate is arranged on a positioning unit during the inspection method. The positioning unit holding the substrate is moved with respect to the beam(s) or beam path(s) in order to inspect different areas of the surface pattern. Preferably the positioning unit is adapted to move the substrate in a plane in at least one, preferably two spatial directions.

It is preferred that only light of one diffraction order (preferably the zeroth order) is coupled into the spectrometer. Other diffraction order may be blocked e. g. by apertures. If the periodic surface pattern of the substrate is coarse, e.g. having structures of greater than 4 $\mu$m, it may be advantageous to filter out the other diffraction orders by apertures in the Fourier plane of a lens.

Preferably, the beam of first light and/or the beam of second light is/are directed essentially perpendicularly to the surface of the substrate.

Preferably, the beam of first light and the beam of second light are not collinear, preferably inclined with respect to each other. Here, when performing steps (a) and (b) simultaneously, adverse influences of the respective other light are avoided, since the beam paths running to the detectors do not overlap with each other (at least when being coupled into the detectors). In this embodiment the light beams may be asymmetrically with respect to the substrate.

It may be preferred that the beam of first light and/or the beam of second light is/are slanted with respect to the front side of the of the substrate (allowing to prevent adverse mutual influences).

It is preferred that the first light and the second light are polychromatic (i.e. having different wavelengths) and have - prior to interaction with the surface pattern - the same characteristics, particularly essentially the same spectrum.

Preferably, first light and second light are broad-banded and/or have a continuous spectrum and/or have an overlapping spectrum, at least before interacting with the surface pattern. This allows accurate measurements. Extrapolations of the measurements and/or results are not necessary. Broad-banded meaning to include a range of at least 10nm, preferably at least 100 nm, even more preferably at least 300nm.

Preferably, the inspection method comprises a step of comparing the quantity with a reference, wherein preferably a deviation between the quantity and the reference is recorded and/or related to a threshold. Surface patterns having defects and/or undesired shape or periodicity may be recognized reliably.

Preferably, at least one geometrical property of the surface pattern, preferably the height and/or the width and/or the periodicity of a periodic structure of the surface pattern, is determined from the quantity. Thus, direct information of a geometrical quantity may be obtained and e.g. compared with ideal values, be recorded or be outputted e.g. for optimizing a manufacturing process. Preferably, the periodicity of the peaks in the (wavelength- or angle-dependent) quantity is used, e.g. to calculate the desired at least one geometrical property of the surface pattern.

In an embodiment of the invention a theoretical spectrum is calculated for a (periodic) model structure. The theoretical spectrum is compared with a spectral quantity calculated from measurements in step (e). In an iteration model the dimensions of the model structure are varied as long as the theoretical spectrum matches with the spectral quantity calculated from measurements in step (e). Possible iteration processes are disclosed in US5867276A and EP1129322B1, the disclosure of which is incorporated by reference into this specification.

The object of the invention is also achieved by an inspection device for inspecting a surface pattern formed on a front side of a substrate, preferably of a sapphire wafer, comprising:

- at least one light source for generating light of different wavelengths to be directed to the substrate,

- at least one detector for measuring light generated by the at least one light source and after having interacted with the surface pattern,

- a data processing unit for calculating a quantity containing information about at least one geometric property of the surface pattern of the substrate, wherein the data processing unit is in communication with the at least one detector,

wherein the inspection device is adapted to perform an inspection method according to one of the preceding claims.

Here, a control unit may control the inspection method as described above.

The data processing unit may be in (permanent or temporary) communication with the detector(s).

Preferably, the inspection device comprises two light sources for irradiating a substrate from opposite sides and two detectors for detecting light from opposite sides of the substrate.

Preferably, the inspection device comprises a positioning unit for turning around a substrate with respect to the at least one light source. After light has been directed to one side of the substrate, the positioning unit turns around the substrate, so that the other side faces towards the (incident) light.

Further embodiments of the invention are indicated in the figures and in the dependent claims. The list of reference marks forms part of the disclosure. The invention will now be explained in detail by the drawings. In the drawings:

Fig. 1    shows a LED fabricated from a substrate having a surface pattern;

Fig. 2    shows geometric properties of a periodic surface pattern of a substrate;

Fig. 3    shows a periodic surface pattern from the front side of the substrate;

Fig. 4    shows an embodiment of an inspection device with transmission measurement;

Fig. 5    shows an alternative embodiment with reflection measurement;

Fig. 6    shows a further embodiment of an inspection device having a positioning device for turning around the substrate;

Fig. 7    shows a quantity dependent of the wavelength, calculated from theory;

Fig. 8    shows a quantity dependent of the wavelength, calculated from the measured characteristics of the first and second light; and

Fig. 9    shows measured characteristics of the first and second light.

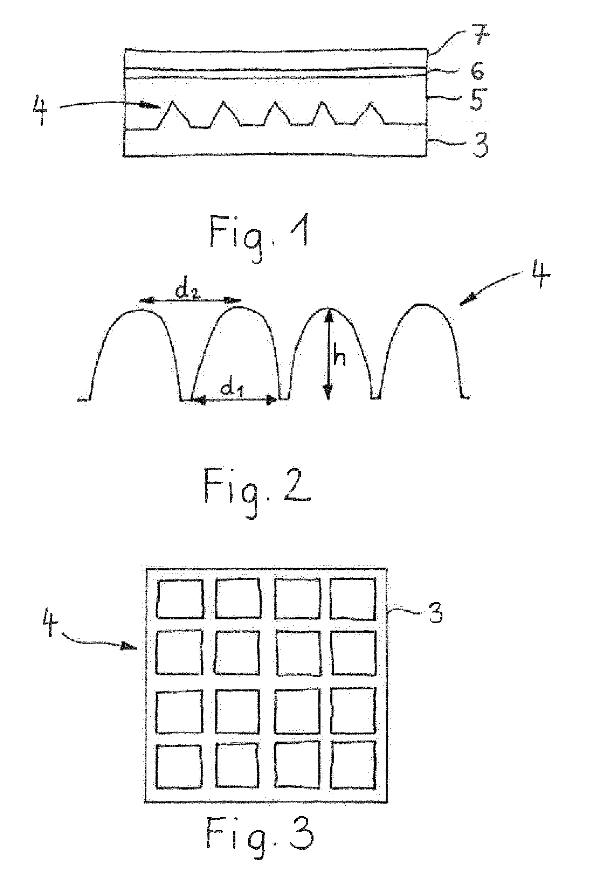

Fig. 1 shows a high-power LED comprising a patterned sapphire substrate 3 covered by a n-doped layer 5, an active layer 6 and a p-doped layer 7. The surface pattern 4 allows to enhance the efficiency of such LEDs, since (1) the density of defects in the active (epitaxy) layer 6 may be reduced, and (2) losses caused by total internal reflection due to scattering processes may be reduced.

The surface pattern is preferably periodically and may comprise structures such as cones, pyramids, columns, domes, etc. There are several methods for fabricating such structures, e.g. wet-chemical etching or dry plasma etching. The methods comprise the application of a photo lacquer layer as well as lithographical processing steps before etching. The dimensions of the periodic structures may (exemplarily) amount to 2 to 4 $\mu$m in lateral direction and between 1 and 2$\mu$m in depth.

In order to inspect the quality of the surface pattern of substrates an inspection method has been developed. The invention is not only applicable to sapphire substrates as mentioned in the embodiment of Fig. 1, but to all substrates having a (periodic) surface pattern. Substrates may be e.g. quartz, sapphire and/or semiconductor substrates. It is also possible to inspect photoresist-structures on wafers.

Fig. 2 shows some geometrical properties that are interesting for inspection: height d1, width d1 and periodicity d2. Also the shape of a structure may be an interesting parameter. Fig. 3 shows (indirectly) a further geometrical property: degree of filling (with those structures). The degree of filling may be calculated from the width d1.

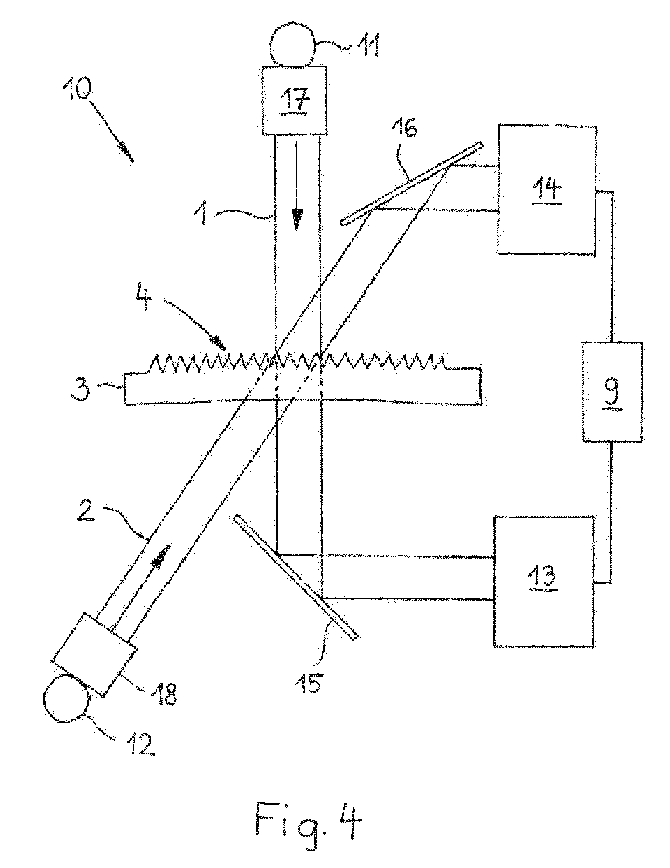

Fig. 4 now illustrates an embodiment of an inspection device 10 and an inspection method. A substrate 3 having a surface pattern 4 on its front side is arranged within the inspecting device 10. The inspection method comprises the steps of:

(a) irradiating , with first light 1, preferably having different wavelengths, a first area of the surface pattern 4 from the front side of the substrate 3;

(b) measuring at least one characteristic of said first light 1 after having interacted with the surface pattern 4, preferably by diffraction;

(c) irradiating , with second light 2, preferably having different wavelengths, a second area of the surface pattern 4 through the back side of the substrate 3, wherein the first area and the second area at least partially, preferably completely, overlap with each other;

(d) measuring at least one characteristic of said second light 2 after having interacted with the surface pattern 4, preferably by diffraction.

A beam of first light 1 is generated by a first light source 11 and a beam forming optics 17 and directed to the surface pattern 4 from the front side of the substrate 3. A beam of second light 2 is generated by a second light source 12 and a beam forming optics 18 and directed to the surface pattern 4 through the back side of the substrate 3.

Step (b) is performed by means of a first detector 13. Step (d) is performed by means of a second detector 14. The Detectors 13, 14 may each comprise a receiving optics and a spectrometer for measuring the intensity of light in dependence of the wavelength. Mirrors 15, 16 deflect the lights 1, 2 into the respective detector 13, 14. The detectors 13, 14 are connected to a data processing unit 9. In the data processing unit 9 step (e) of the inspection method is performed:

(e) calculating a quantity T containing information about at least one geometric property of the surface pattern 4 of the substrate 3, wherein the quantity T is a function of both, the characteristic of the first light 1 measured in step (b) and the characteristic of the second light 2 measured in step (d).

Preferably, the detectors 13, 14 are of the same type such that the at least one characteristic of said first light 1 measured in step (b) is of the same type as the characteristic of said second light 2 measured in step (d).

In the embodiment of Fig. 4 step (b) is performed after transmission of said first light 1 through the substrate 3 and step (d) is performed after transmission of said second light 2 through the substrate 3.

The beam of first light 1 is directed essentially perpendicularly to the surface of the substrate 3, wherein the beam of second light 2 is inclined to the beam of first light. As can be seen from Fig. 4 the beams are spatially separated. There is no mutual disturbance of the measurements of first and second light. It is thus preferred that the beam of first light 1 and the beam of second light 2 are not collinear, preferably inclined with respect to each other. Fig. 4 shows that preferred asymmetrical run of the beam paths of first and second light with respect to the substrate.

Step (a) and step (c) may overlap in time, preferably be performed simultaneously.

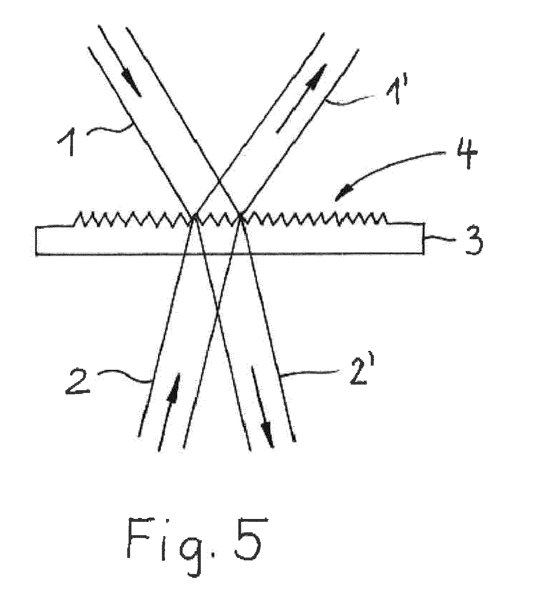

In an alternative embodiment measurements may be performed on reflected light as shown in the setup of Fig. 5. For clarity reasons the reflected beams in Fig. 5 are denoted with 1' and 2'.

The at least one characteristic measured in step (b) is preferably a spectrum R(A) of said first light 1 after having interacted with the surface pattern 4 (in Fig. 4 a transmission spectrum). The at least one characteristic measured in step (d) is a spectrum S($\lambda$) of said second light 2 after having interacted with the surface pattern 4 (in Fig. 4 a transmission spectrum).

In the data processing unit 9 the quantity T(A) is calculated from the ratio between the a spectrum S($\lambda$) of said first light 1 and the a spectrum S($\lambda$) of said second light 2, i.e.

$$T(\lambda) = R(\lambda)/S(\lambda) \text{ or } T(\lambda) = f\left( R(\lambda)/S(\lambda) \right);$$

or

$$T(\lambda) = S(\lambda)/R(\lambda) \text{ or } T(\lambda) = f\left( S(\lambda)/R(\lambda) \right).$$

wherein the ratio is calculated per wavelength. It could be found that the calculation of $T(\lambda) = S(\lambda)/R(\lambda)$ or $T(\lambda) = f(S(\lambda)/R(\lambda))$ is a preferred embodiment.

R(A) and S(A) may be pre-processed, preferably pre-filtered, e.g. by a low pass filter, in order to exclude high wavelengths. Here, the ratio mentioned above my be e.g. calculated according to:
T(A) = f (R($\lambda$)) / f' (S($\lambda$)), wherein the f characterizes the effect of a preprocessing, e.g. of a filter applied to the measured spectra R(A) and S($\lambda$).

In general the quantity calculated in step (e) may be illustrated as follows:

$$T = f(R, S) \text{ or } T(\lambda) = f\left( R(\lambda), S(\lambda) \right).$$

In the latter case the quantity $T(\lambda)$ is a spectral quantity.

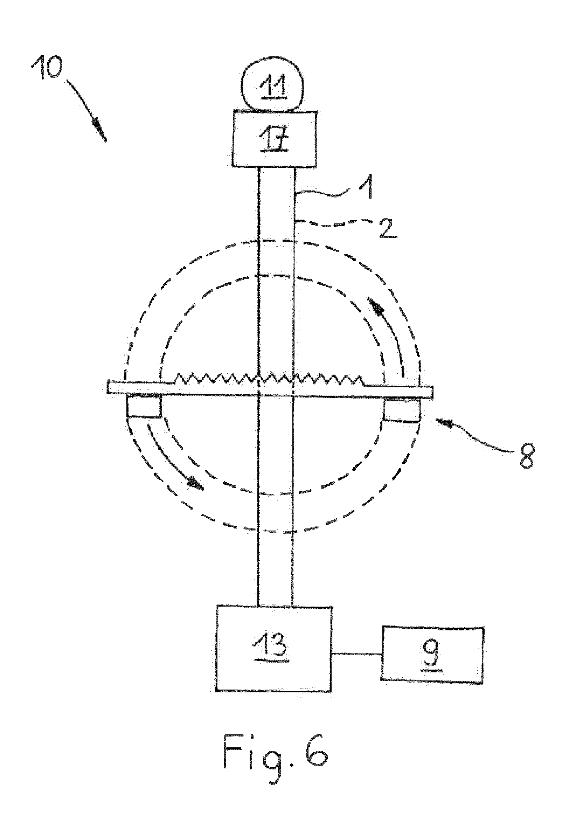

While in the embodiment of Fig. 4 first light 1 and second light 2 are generated by separate light sources 11, 12, the embodiment of Fig. 6 has only one light source. Here, first light 1 and second light 2 are generated by the same light source 11, and wherein the substrate 3 is turned around (by 180°) between step (a) and step (c) by means of a positioning unit 8.

In an alternative embodiment light generated by the light source may be reflected by at least one mirror in order to generate a beam of first light 1 and a beam of second light 2.

As already mentioned first light 1 and second light 2 may be directed to the substrate 3 in form of beams, preferably scanning the pattern 4. The light source(s) 11, 12 may comprise at least one LED, such as a white LED, or any other broadband light source, such as a halogen or xenon lightbulb etc. First light 1 and second light 2 may be broad-banded and/or have a continuous spectrum and/or have an overlapping spectrum, at least before interacting with the surface pattern 4. It is preferred that the first light 1 and the second light 2 are polychromatic (i.e. having different wavelengths) and have - prior to interaction with the surface pattern 4 - the same characteristics, particularly the same spectrum.

In the data processing unit 9 or in an external evaluation unit (not shown) the quantity T may be compared with a reference, wherein preferably a deviation between the quantity T and the reference is recorded and/or related to a threshold.

It is also possible that at least one geometrical property of the surface pattern 4, preferably the height h and/or the width d1 and/or the periodicity d2 of a periodic structure of the surface pattern 4, is determined from the quantity T. The data processing unit 9 may calculate absolute values for these geometrical quantities or relative values compared to a (high-quality) sample substrate. Spectra obtained from the sample substrate may be used as set value.

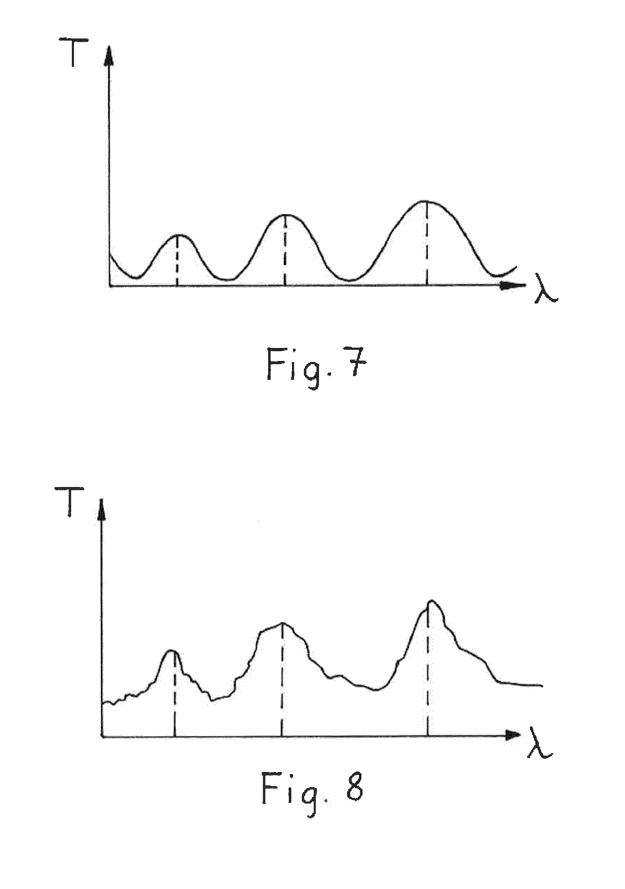

Fig. 7 shows a spectral quantity T($\lambda$) calculated from theoretical considerations. Fig. 8 shows a quantity ($\lambda$) as calculated in step (e) of the inspection method. A comparison of these two spectral quantities comprises e.g. the positions (wavelength) and intensities of the peaks originating from diffraction (indicated by dashed lines). Especially the periodicity of the peaks may be compared.

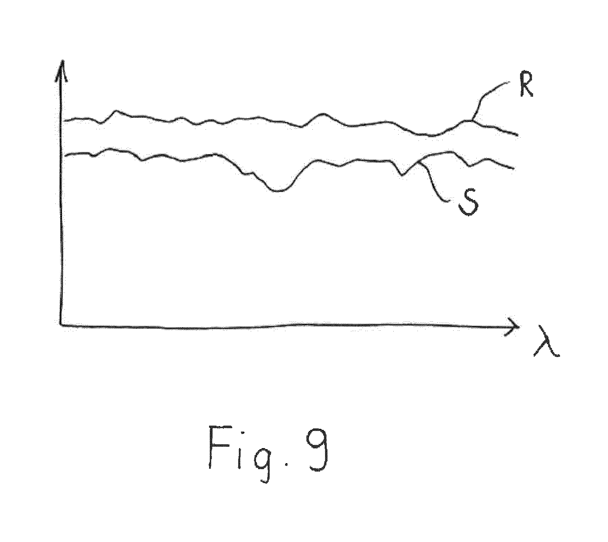

Finally, Fig. 9 shows the spectra (intensity vs. wavelength) R($\lambda$) and S($\lambda$). As can be seen from the spectra, the signal (originating from diffraction by the surface pattern 4) is not visible due to the fact that the noise originating form scattering of light at the back side of the substrate is very dominant. The signal (comprising the diffraction peaks) may be extracted or enhanced by combing the R(A) and S(A) according to step (e) thereby increasing the signal to noise ratio. The result of step (e) can be seen in Fig. 8.

Calculation of diffraction patterns in theory may use e.g. the following methods: Rigorous Coupled-Wave Analysis (RCWA) or Transfer Matrix Method (TMM). It is apparent for men skilled in the art to use different approaches.

The invention has been described by means of measuring the spectra of first and second light after being diffracted on the surface pattern 4. However, the invention is not restricted to this embodiment. The characteristic of first (and second) light measured in steps (b) and (d) may be a different one. It would be possible to measure the intensity distribution (spectrum) in dependence of an incident angle and/or emergent angle of first (or second) light. Here, it could be also possible to use monochromatic light. Further approaches could be based on the measurement of light polarisation and/or change of light polarisation due to the scattering process with the surface pattern 4.

The invention is not restricted to these embodiments. Other variants will be obvious for the person skilled in the art and are considered to lie within the scope of the invention as formulated in the following claims.

Individual features described in above specification, particularly with respect to the figures may be combined with each other to form other embodiments and/or applied mutatis mutandis to what is described in the claims and to the rest of the description.

**List of reference signs**

| | |
|---|---|
| 1 | first light |
| 1' | reflected beam of first light |
| 2 | second light |
| 2' | reflected beam of second light |
| 3 | substrate |
| 4 | surface pattern |
| 5 | n-doped layer |
| 6 | active layer |
| 7 | p-doped layer |
| 8 | positioning unit |
| 9 | data processing unit |
| 10 | inspection device |
| 11 | light source |
| 12 | light source |
| 13 | detector |
| 14 | detector |
| 15 | mirror |
| 16 | mirror |
| 17 | beam forming optics |
| 18 | beam forming optics |

**Claims**

1. Inspection method for inspecting a surface pattern (4) formed on a front side of a substrate (3), preferably of a sapphire wafer, wherein the surface pattern (4) is preferably periodic, the method comprising the steps of:

   (a) directing first light (1), preferably having different wavelengths, to a first area of the surface pattern (4) from the front side of the substrate (3);
   (b) measuring, preferably by means of a spectrometer, at least one characteristic of said first light (1) after having interacted with the surface pattern (4), preferably by diffraction;
   (c) directing second light (2), preferably having different wavelengths, to a second area of the surface pattern (4) through the back side of the substrate (3), wherein the first area and the second area at least partially, preferably completely, overlap with each other;
   (d) measuring, preferably by means of a spectrometer, at least one characteristic of said second light (2) after having interacted with the surface pattern (4), preferably by diffraction;
   (e) calculating a quantity (T), preferably a spectral quantity (T(λ)), containing information about at least one geometric property of the surface pattern (4) of the substrate (3), wherein the quantity (T) is a function of both, the characteristic of the first light (1) measured in step (b) and the characteristic of the second light (2) measured in step (d).

2. Inspection method according to claim 1, wherein the at least one characteristic of said first light (1) measured in step (b) is of the same type as the characteristic of said second light (2) measured in step (d).

3. Inspection method according to claim 1 or 2, wherein step (b) is performed after transmission of said first light (1) through the substrate (3) or after reflection of said first light (1) by the substrate (3) and/or wherein step (d) is performed after transmission of said second light (2) through the substrate (3) or after reflection of said second light (2) by the substrate (3).

4. Inspection method according to one of the preceding claims, wherein the at least one characteristic measured in step (b) is a spectrum (R) of said first light (1) after having interacted with the surface pattern (4), preferably a transmission spectrum, and/or wherein the characteristic measured in step (d) is a spectrum (S) of said second light (2) after having interacted with the surface pattern (4), preferably a transmission spectrum.

5. Inspection method according to claim 4, wherein the quantity (T) is calculated from the ratio between a spectrum (R) of said first light (1), preferably a filtered spectrum (R) of said first light (1), and a spectrum (S) of said second light (2), preferably a filtered spectrum (S) of said second light (2).

6. Inspection method according to one of the preceding claims, wherein said first light (1) and said second light (2) are generated by the same light source (11) and wherein the substrate (3) is turned around between step (a) and step (c) or wherein the light generated by the light source (11) is reflected by at least one mirror, wherein preferably the light source (11) comprises at least one LED.

7. Inspection method according to one of the claims 1 to 6, wherein first light (1) and second light (2) are generated by separate light sources (11, 12), wherein preferably each of the light sources (11, 12) comprises at least one LED.

8. Inspection method according to one of the preceding claims, wherein step (a) and step (c) overlap in time, preferably also step (b) and (d) overlapping in time.

9. Inspection method according to one of the preceding claims, wherein first light (1) and second light (2) are directed to the substrate (3) in form of a beam, preferably a collimated light beam, preferably scanning the pattern (4).

10. Inspection method according to claim 9, wherein the beam of first light (1) and the beam of second light (2) are not collinear, preferably inclined with respect to each other, and/or wherein the beam of first light (1) and/or the beam of second light (2) is/are slanted with respect to the front side of the of the substrate (3).

11. Inspection method according to one of the preceding claims, wherein first light (1) and second light (2) are broad-banded and/or have a continuous spectrum and/or have an overlapping spectrum, at least before interacting with the surface pattern (4).

12. Inspection method according to one of the preceding claims, wherein the inspection method comprises a step of comparing the quantity (T) with a reference, wherein preferably a deviation between the quantity (T) and the reference is recorded and/or related to a threshold.

13. Inspection method according to one of the preceding claims, wherein at least one geometrical property of the surface pattern (4), preferably the height (h) and/or the width (d1) and/or the periodicity (d2) of a periodic structure of the surface pattern (4), is determined from the quantity (T).

14. Inspection device (10) for inspecting a surface pattern (4) formed on a front side of a substrate (3), preferably of a sapphire wafer, comprising:

- at least one light source (11, 12) for generating light (1, 2), preferably having different wavelengths, to be directed to the substrate (3),
- at least one detector (13, 14), preferably a spectrometer, for measuring light (1, 2) generated by the at least one light source (11, 12) and after having interacted with the surface pattern (4),
- a data processing unit (9) for calculating a quantity (T) containing information about at least one geometric property of the surface pattern (4) of the substrate (3), wherein the data processing unit (9) is in communication with the at least one detector (13, 14),
wherein the inspection device (10) is adapted to perform an inspection method according to one of the preceding claims.

15. inspection device according to claim 14, wherein the inspection device (10) comprises two light sources (11, 12) for irradiating a substrate (3) from opposite sides and two detectors (13, 14) for detecting light (1, 2) from opposite sides of the substrate (3) and/or wherein the inspection device (10) comprises a positioning unit (8) for turning around a substrate (3) with respect to the at least one light source (11).

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 15 16 4145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 064 477 A (MATSUMOTO SHUNICHI [JP] ET AL) 16 May 2000 (2000-05-16) * column 4, line 11 - page 5, line 46; claims 1, 4; figures 1, 23, 36 * | 1-6,8-15 | INV. G01B11/30 G01M11/00 G01R31/26 G01R31/28 |
| X | EP 1 801 569 A2 (BASLER AG [DE]) 27 June 2007 (2007-06-27) * paragraph [0001]; figure 1 * * paragraph [0009] - paragraph [0015] * * paragraph [0034] * * paragraph [0050]; claim 1 * | 1-6,8-15 | G01N21/896 G01N21/95 G01N21/956 G01N21/958 H01L33/00 |
| X | US 2008/079931 A1 (LIM KWON [KR] ET AL) 3 April 2008 (2008-04-03) * paragraph [0050] - paragraph [0060]; figures 1-3 * | 1-9, 11-15 | |
| X | US 5 748 320 A (MORIYA KAZUO [JP]) 5 May 1998 (1998-05-05) * abstract; figure 1 * | 1-3,8, 10,12-15 | |
| X | JP 2009 098053 A (TOPPAN PRINTING CO LTD) 7 May 2009 (2009-05-07) * column 1, line 22 - line 40; figure 2 * | 1-3,6,8, 12,13,15 | **TECHNICAL FIELDS SEARCHED (IPC)** G01B G01M G01R |
| X | US 2011/101226 A1 (BEN-ZVI GUY [IL] ET AL) 5 May 2011 (2011-05-05) * abstract; claim 1; figure 1 * | 1,15 | G01N H01L |
| X | US 2013/329222 A1 (KUDO YUJI [JP]) 12 December 2013 (2013-12-12) * abstract; claim 1; figure 1 * * paragraph [0053] - paragraph [0062] * * paragraph [0078] * | 1,6,15 | |

-/--

The present search report has been drawn up for all claims

| Place of search | Date of completion of the search | Examiner |
|---|---|---|
| Berlin | 22 September 2015 | Koll, Hermann |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches
Patentamt

European
Patent Office

Office européen
des brevets

# EUROPEAN SEARCH REPORT

**Application Number**

EP 15 16 4145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHUN-MIN LIN ET AL: "InGaN-Based Light-Emitting Diodes With a Sawtooth-Shaped Sidewall on Sapphire Substrate", IEEE PHOTONICS TECHNOLOGY LETTERS, IEEE SERVICE CENTER, PISCATAWAY, NJ, US, vol. 24, no. 13, 1 July 2012 (2012-07-01), pages 1133-1135, XP011445410, ISSN: 1041-1135, DOI: 10.1109/LPT.2012.2196511 * the whole document * | 1,15 | |
| A | US 2012/019626 A1 (HOU ZHEN [US] ET AL) 26 January 2012 (2012-01-26) * abstract; claim 1; figure 1 * | 1-15 | |
| A | US 2012/300039 A1 (MAISON BENOIT [BE] ET AL) 29 November 2012 (2012-11-29) * abstract; claim 1; figure 2 * | 1-15 | |
| A | US 5 812 260 A (LOUISNATHAN S JOHN [US]) 22 September 1998 (1998-09-22) * abstract * | 1-15 | **TECHNICAL FIELDS SEARCHED (IPC)** |
| A | US 6 806 951 B2 (WACK DAN [US] ET AL) 19 October 2004 (2004-10-19) * abstract * | 1-15 | |
| A | US 5 867 276 A (MCNEIL JOHN R [US] ET AL) 2 February 1999 (1999-02-02) * abstract * | 1-15 | |
| A | EP 1 129 322 A1 (STEAG HAMATECH AG [DE]) 5 September 2001 (2001-09-05) * abstract; claim 1; figure 1 * | 1-15 | |

The present search report has been drawn up for all claims

| Place of search | Date of completion of the search | Examiner |
|---|---|---|
| Berlin | 22 September 2015 | Koll, Hermann |

EPO FORM 1503 03.82 (P04C01)

## ANNEX TO THE EUROPEAN SEARCH REPORT
## ON EUROPEAN PATENT APPLICATION NO.

EP 15 16 4145

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2015

| Patent document cited in search report | | Publication date | Patent family member(s) | | Publication date |
|---|---|---|---|---|---|
| US 6064477 | A | 16-05-2000 | JP | 3314440 B2 | 12-08-2002 |
| | | | JP | H06249789 A | 09-09-1994 |
| | | | US | 6064477 A | 16-05-2000 |
| | | | US | 6084664 A | 04-07-2000 |
| EP 1801569 | A2 | 27-06-2007 | DE | 102005061785 A1 | 05-07-2007 |
| | | | EP | 1801569 A2 | 27-06-2007 |
| US 2008079931 | A1 | 03-04-2008 | KR | 100819000 B1 | 02-04-2008 |
| | | | US | 2008079931 A1 | 03-04-2008 |
| US 5748320 | A | 05-05-1998 | JP | 3418054 B2 | 16-06-2003 |
| | | | JP | H09222307 A | 26-08-1997 |
| | | | US | 5748320 A | 05-05-1998 |
| JP 2009098053 | A | 07-05-2009 | NONE | | |
| US 2011101226 | A1 | 05-05-2011 | EP | 2171539 A2 | 07-04-2010 |
| | | | JP | 5489002 B2 | 14-05-2014 |
| | | | JP | 2010533309 A | 21-10-2010 |
| | | | KR | 20100063003 A | 10-06-2010 |
| | | | US | 2011101226 A1 | 05-05-2011 |
| | | | WO | 2009007977 A2 | 15-01-2009 |
| US 2013329222 | A1 | 12-12-2013 | CN | 103384822 A | 06-11-2013 |
| | | | KR | 20140048092 A | 23-04-2014 |
| | | | TW | 201236100 A | 01-09-2012 |
| | | | US | 2013329222 A1 | 12-12-2013 |
| | | | WO | 2012115013 A1 | 30-08-2012 |
| US 2012019626 | A1 | 26-01-2012 | CN | 103858426 A | 11-06-2014 |
| | | | US | 2012019626 A1 | 26-01-2012 |
| | | | WO | 2012012265 A2 | 26-01-2012 |
| US 2012300039 | A1 | 29-11-2012 | CN | 103038603 A | 10-04-2013 |
| | | | EP | 2598838 A2 | 05-06-2013 |
| | | | JP | 2013534312 A | 02-09-2013 |
| | | | KR | 20130045351 A | 03-05-2013 |
| | | | SG | 187136 A1 | 28-02-2013 |
| | | | US | 2012300039 A1 | 29-11-2012 |
| | | | WO | 2012014092 A2 | 02-02-2012 |
| US 5812260 | A | 22-09-1998 | NONE | | |
| US 6806951 | B2 | 19-10-2004 | AU | 9506001 A | 02-04-2002 |
| | | | EP | 1319244 A1 | 18-06-2003 |

EPO FORM P0459

For more details about this annex : see Official Journal of the European Patent Office, No. 12/82

## EP 3 081 901 A1

### ANNEX TO THE EUROPEAN SEARCH REPORT
### ON EUROPEAN PATENT APPLICATION NO.

EP 15 16 4145

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2015

| Patent document cited in search report | | | Publication date | Patent family member(s) | | | Publication date |
|---|---|---|---|---|---|---|---|
| | | | | JP | 2004513509 | A | 30-04-2004 |
| | | | | JP | 2014146817 | A | 14-08-2014 |
| | | | | US | 2002093648 | A1 | 18-07-2002 |
| | | | | US | 2002097406 | A1 | 25-07-2002 |
| | | | | US | 2002102749 | A1 | 01-08-2002 |
| | | | | US | 2002103564 | A1 | 01-08-2002 |
| | | | | US | 2002107660 | A1 | 08-08-2002 |
| | | | | US | 2002179864 | A1 | 05-12-2002 |
| | | | | US | 2002179867 | A1 | 05-12-2002 |
| | | | | US | 2002180985 | A1 | 05-12-2002 |
| | | | | US | 2002188417 | A1 | 12-12-2002 |
| | | | | US | 2002190207 | A1 | 19-12-2002 |
| | | | | US | 2003011786 | A1 | 16-01-2003 |
| | | | | US | 2004073398 | A1 | 15-04-2004 |
| | | | | US | 2004092045 | A1 | 13-05-2004 |
| | | | | US | 2006072807 | A1 | 06-04-2006 |
| | | | | WO | 0225708 | A2 | 28-03-2002 |
| US 5867276 | A | | 02-02-1999 | NONE | | | |
| EP 1129322 | A1 | | 05-09-2001 | AT | 287078 | T | 15-01-2005 |
| | | | | CA | 2350511 | A1 | 25-05-2000 |
| | | | | CN | 1429332 | A | 09-07-2003 |
| | | | | DE | 19852323 | A1 | 31-05-2000 |
| | | | | EP | 1129322 | A1 | 05-09-2001 |
| | | | | ES | 2237180 | T3 | 16-07-2005 |
| | | | | HK | 1056772 | A1 | 29-07-2005 |
| | | | | IL | 143016 | A | 27-09-2004 |
| | | | | JP | 2002530632 | A | 17-09-2002 |
| | | | | KR | 100426045 | B1 | 06-04-2004 |
| | | | | TW | 414858 | B | 11-12-2000 |
| | | | | US | 6744521 | B1 | 01-06-2004 |
| | | | | WO | 0029808 | A1 | 25-05-2000 |

EPO FORM P0459

For more details about this annex : see Official Journal of the European Patent Office, No. 12/82

**EP 3 081 901 A1**

## REFERENCES CITED IN THE DESCRIPTION

**Patent documents cited in the description**

- US 6806951 B2
- US 5867276 A
- US 8643847 B1
- EP 1129322 B1